# EUROPEAN PATENT APPLICATION

(11) **EP 0 537 860 A1**
(43) Date of publication of application: **21.04.1993**
(21) Application number: 92203177.8
(22) Date of filing: 15.10.1992
(51) Int. Cl.: A01J 7/00

(54) **Device for locating a teat**

(30) Priority: 15.10.1991 NL 9101719
(71) Applicant: STICHTING INSTITUUT VOOR MECHANISATIE ARBEID EN GEBOUWEN, NL-6700 AA Wageningen (NL)
(72) Inventor: van de Werken, Johannes, NL-6708 BK Wageningen (NL)
(74) Representative: de Bruijn, Leendert C.

(57) **Abstract**

A device for locating a teat of, for example, the udder of a cow is provided. It comprises sensing elements (11 - 14) which bound an area in which the teat can be inserted, and also drive means for moving said sensing elements towards the teat while reducing said area, until they are in contact or almost in contact therewith, in such a way that when essentially all sensing elements make contact or almost make contact with the teat, the latter is situated essentially in the centre of the area initially marked out by the sensing elements.

## Description

The present invention relates to a device for locating a teat of, for example, the udder of a cow.

The known devices of this type make use of fixed sensing elements, the functioning of which is based on interruption or reflection of sound or light waves. The position of the teat is determined and the teat cup to be fitted on it is controlled with the information obtained in this way. Such a device is known from, for example, EP-B-0,213,660.

The disadvantage of such devices is that accurate control equipment, which is susceptible to faults, is required for locating the teat. In addition, such a device is quite complex, since the location of the teat and the positioning of the teat cup must be carried out by means of two separate control circuits which have to be interlinked.

The object of the present invention is to provide a simplified device for locating a teat which operates efficiently and reliably. Such a device for that purpose is provided with sensing elements which bound an area in which the teat can be inserted, and also drive means for moving said sensing elements towards the teat while reducing said area, until they are in contact or almost in contact therewith, in such a way that when essentially all sensing elements make contact or almost make contact with the teat, the latter is situated essentially in the centre of the area initially marked out by the sensing elements.

Due to the fact that the sensing elements are moved until they are in contact or almost in contact with the teat, the location does not have to take place again if there are unexpected movements of the teat. Particularly if the teat cup to be connected to the teat is directly linked with the movement of the sensing elements, it is hardly necessary to use complex control equipment, which is susceptible to faults.

It is preferable to make use of four sensing elements lying opposite each other in pairs. The teat is enclosed while these sensing elements are moving towards each other. For example, the sensing elements can comprise a flexible pulling element which can be varied in length. The teat is enclosed by shortening this flexible sensing element.

For a device which is very simple and very reliable in operation, tension springs and wedge-shaped elements which can be moved to and fro are used for driving the sensing elements, the springs moving the sensing elements towards each other, and the wedge-shaped elements forcing the sensing elements apart.

The invention will be described in greater detail below on the basis of two preferred embodiments with reference to the appended drawings, in which:
Fig. 1 shows schematically a perspective view of a first embodiment of the device according to the present invention, provided with a teat cup;
Fig. 2 shows schematically a perspective view of a second embodiment of the present invention.

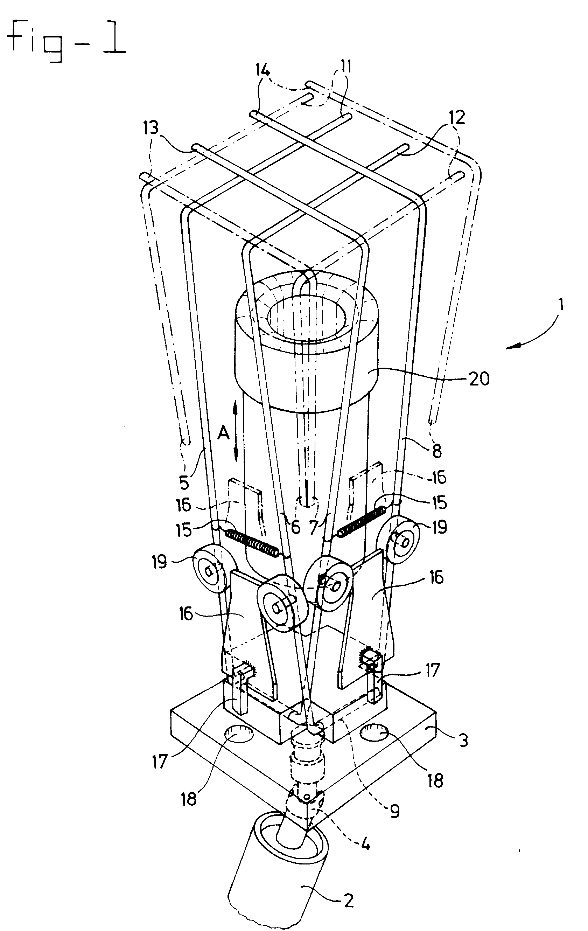

The device 1 shown in Fig. 1 for locating a teat is mounted on an arm 2 of a milking robot which is not shown, with which arm 2 the device 1 can be taken under a cow in a manner such as that described, for example, in EP-B-0,213,660.

The device 1 has a base plate 3 which is gimbal mounted on the arm 2 by means of a hinge 4. Four bars 5 - 8, the ends of which are bent over at right angles, are fixed on this base plate 3. The lower bent ends of these bars 5 - 8 are inserted into bores 9 in the base plate 3, so that the bars 5 - 8 can pivot in these bores 9. The upper bent ends of the bars 5 - 8 form four sensing elements 11 - 14. These sensing elements 11 - 14 are situated opposite each other in pairs. The sensing elements 11, 12 and 13, 14 can move towards each other through the hinged fastening of the bars 5 - 8. Fig. 1 shows by solid lines the position of the bars 5 - 8 and the sensing elements 11 - 14 in a state in which they are moved towards each other, while a position moved apart is shown schematically by dashed and dotted lines. As shown, a tension spring 15 is disposed between the bars 5, 6 and 7, 8. This spring 15 tries to move the sensing elements 11, 12 and 13, 14 towards each other. The device is also provided with wedge-shaped elements 16. The latter can be moved up and down in the direction of the arrow A. These wedge-shaped elements 16 are operated by means of rods 17 by pneumatic cylinders (not shown). For the sake of clarity, these rods 17 are shown only partially, but in reality they can run through bores 18 in the base plate 3 and continue to pneumatic cylinders lying below the base plate 3. The supporting edges of the wedge-shaped elements 16 which run towards each other interact with guide rollers 19 which are fixed to the bars 5 - 8. The sensing elements 11, 12 and 13, 14 are driven apart against the action of the spring 15 by moving the wedge-shaped elements 16 out of the position shown by solid lines in Fig. 1 to the position shown schematically by dashed and dotted lines in Fig. 1.

The teat cup 20 shown is fixed to the base plate 3 in a manner not shown, in such a way that it can now be moved only up and down relative thereto by means of a pneumatic cylinder.

The device shown in Fig. 1 operates as follows:

With the sensing elements 11 - 14 in the position shown by dashed and dotted lines, the device 1 is moved below the udder of a cow. The device 1 is in this case positioned in such a way that the teat to which the teat cup 20 is to be connected lies with a very great degree of certainty in the area which is bounded by the sensing elements 11 - 14. Since accurate data are not required for this rough positioning, it is, for example, sufficient to have data established once per cow. The device 1 is then raised, so that the teat is surrounded by the sensing elements 11 - 14. In this case the teat will generally be closer to one or two of the sensing elements 11 - 14 than to the other sensing elements.

While the wedge-shaped element 16 is moved downwards from the position shown by dashed and dotted lines to the position shown by solid lines the sensing elements 11, 12 and 13, 14 will move towards each other at approximately the same speed. If, for example, the sensing element 11 touches the teat first, then the base plate 3 will pivot in the direction in which the sensing element 12 is moving. Since hinge 4 pivots very flexibly, sensing element 11 no longer moves towards sensing element 12. From that moment onwards sensing element 12 moves at increased speed towards the teat and in the end comes to rest against it. The sensing elements 13, 14 move towards the teat in a corresponding way. When the sensing elements 11 - 14 have come to a standstill against the teat, the base plate 3 has pivoted into such a position that the teat is in the centre of the area initially bounded by the sensing elements 11 -14. Of course, the orientation of this area has moved along with the base plate 3. Since the teat cup 20 is also held in this centre through its fixing to the base plate 3, the teat cup 20 need only be moved upwards for connection to the teat.

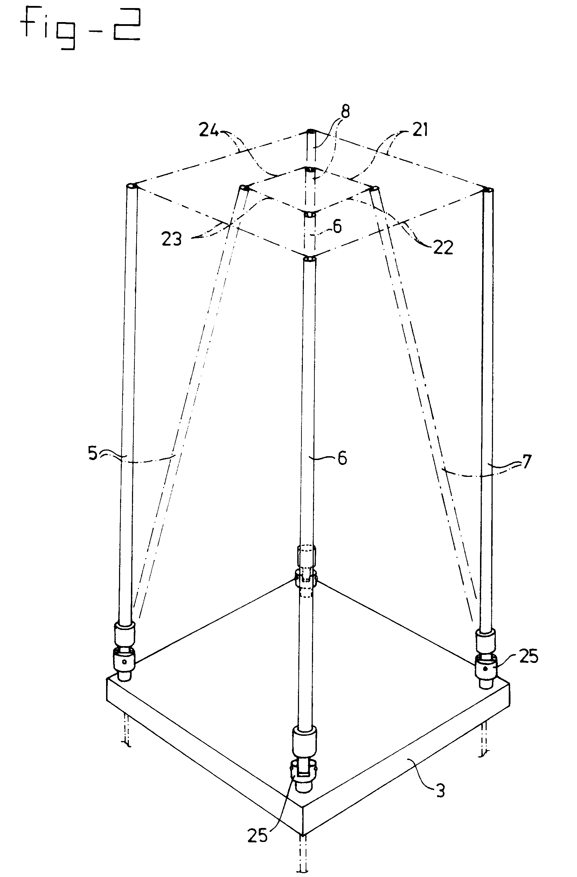

The device 1 shown schematically in Fig. 2 makes use of flexible pulling elements 21 - 24 which are variable in length for forming the sensing elements. The latter bridge the free ends-of the bars 5 - 8, which are fixed by means of hinges 25 to the base plate 3. These hinges 25 allow only movement of the bars 5 - 8 between the positions shown by solid and by dashed and dotted lines. Fig. 2 does not show how the base plate 3 is fixed to a milking robot in a manner corresponding to that of Fig. 1. The free ends of the bars 5 - 8 can be held apart by, for example, compression springs which are not shown, in the position shown by solid lines in Fig. 2. The flexible pulling elements 21 - 24 run through the hollow bars 5 - 8 until they are below the base plate 3, where they are connected to a means for shortening or lengthening them (not shown). If this means is operated so that the flexible pulling elements 21 - 24 are shortened, the free ends of the bars 5 - 8 will move towards each other against the action of the compression springs to a position shown by dashed and dotted lines in Fig. 2. The device shown in Fig. 2 is also capable of making the teat go into line with the teat cup (not shown) fixed to the base plate 3.

Of course, variants of the examples of embodiments shown are conceivable. For example, the flexible pulling elements 21 - 24 in Fig. 2 can comprise resilient stretchable means. They can be fixed to the free ends of the bars 5 - 8 in such a way that they exert a pulling force on the bars 5 - 8 in the position of said bars shown by solid lines. The bars 5 - 8 can then be held in that position by means of, for example, the wedge-shaped elements 16 of Fig. 1. When the bars 5 - 8 are released, they will move under the action of the flexible pulling elements 21 - 24 to the position shown by dashed and dotted lines. No additional means is therefore necessary any longer for lengthening or shortening the flexible pulling means 21 - 24. Use could also be made of a telescopic flexible element which describes a loop, into which the teat is inserted, from one of the bars 5 - 8. Nor need the bars 5 - 8 be straight, but can be curved, for example, in such a way as is necessary to allow space for raising of the teat cup 20.

The embodiment shown in Fig. 1 can also be modified in such a way that the sensing elements 11 - 14 are omitted. The bars 5 and 7 are then rigidly connected to the base plate 3 and together form a V-shaped sensing element. Initially, one of the sides of said V-shaped sensing element is moved towards the teat, until it touches the teat. For this, the base plate 3 is hinged. The other side lying at right angles thereto is then moved towards the teat until it makes contact, in which case the teat slides along the first side, so that the teat in the end lies in the tip of the V-shaped sensing element. This is again virtually the centre of the area marked out initially by the sensing elements, and the teat cup can be fitted below this. A variant thereof is the use of two V-shaped sensing elements which are moved towards each other, and between which the teat is confined.

In order to prevent the teat from being pinched between two sensing elements moving towards each other, it can be ensured by means of stops that the sensing elements always remain at a certain distance from each other. This means that of the sensing elements moving towards each other the sensing element which arrives last is brought to a standstill by a stop just before it makes contact with the teat.

The base plate 3 can also be fixed so that it pivots and slides on the arm 2 of the milking robot. Finally, it should be stated that the sensing elements can be formed by, for example, a light beam. As soon as this light beam is interrupted by the teat, it is no longer moved. Means operating without contact can also be used for the sensing elements. These last two proposals will, however, lead to a considerably more complex device, which consequently operates less reliably. It will therefore be clear that the invention is preferably restricted to the scope given in the claims.

## Claims

1. Device for locating a teat of, for example, the udder of a cow, comprising sensing elements (11 - 14) which bound an area in which the teat can be inserted, and also drive means for moving said sensing elements towards the teat while reducing said area, until they are in contact or almost in contact therewith, in such a way that when essentially all sensing elements make contact or almost make contact with the teat, the latter is situated essentially in the centre of the area initially marked out by the sensing elements.

2. Device according to Claim 1, provided with a teat cup (20), which is connected to drive means which drive the cup according to the movements of the sensing elements (11 - 14), in such a way that when essentially all sensing elements make contact with the teat the teat cup is also in the centre of the area initially marked out by the sensing elements.

3. Device according to one of the preceding claims, comprising a gimbal (4) mounted base plate (3) to which the sensing elements (11 - 14) and possibly also the teat cup (20) are connected.

4. Device according to one of the preceding claims, comprising at least four sensing elements (11 - 14) lying opposite each other in pairs.

5. Device according to one of the preceding claims, in which the sensing elements (11 - 14) comprise a flexible pulling element (21 - 24) which is variable in length.

6. Device according to claims 4 and 5, in which a flexible pulling element (21 - 24) runs between the ends of guide means (5 - 8), which ends can be moved towards each other.

7. Device according to one of the preceding Claims 1 to 4, in which the sensing elements comprise bar-shaped elements.

8. Device according to Claim 7, in which the sensing elements (11 - 14) are connected to the ends of essentially bar-shaped connecting means (5 - 8) which can be moved towards each other.

9. Device according to one of the preceding claims, in which the drive means comprise resilient elements (15).

10. Device according to one of the preceding claims, in which the drive means comprise elements (16) which can be moved up and down and which are provided with supporting edges running towards each other with which the sensing elements (11 - 14) engage in an interacting way.

11. Method for determining the location of a teat of, for example, the udder of a cow, in which sensing elements (11 - 14) are placed around the teat, bounding an area widely surrounding the teat, following which sensing elements lying opposite each other are moved towards each other, and with continuing movement of the other sensing elements a sensing element touching the teat is held essentially still.
